Europäisches Patentamt

European Patent Office

Office européen des brevets

(19)

(11) Veröffentlichungsnummer : **0 412 382 B1**

(12)

# EUROPÄISCHE PATENTSCHRIFT

(45) Veröffentlichungstag der Patentschrift :
**30.12.92 Patentblatt 92/53**

(51) Int. Cl.$^5$ : **E04D 5/14,** E04D 3/36,
F16B 37/14, F16B 43/00

(21) Anmeldenummer : **90114537.5**

(22) Anmeldetag : **28.07.90**

(54) **Einrichtung für die Befestigung einer Dachdichtungsbahn an einer Dachunterkonstruktion.**

(30) Priorität : **09.08.89 DE 3926255**

(43) Veröffentlichungstag der Anmeldung :
**13.02.91 Patentblatt 91/07**

(45) Bekanntmachung des Hinweises auf die
Patenterteilung :
**30.12.92 Patentblatt 92/53**

(84) Benannte Vertragsstaaten :
**AT BE CH DE DK ES FR GB GR IT LI LU NL SE**

(56) Entgegenhaltungen :
**EP-A- 0 276 708
EP-A- 0 283 184
WO-A-89/02504
DE-A- 3 040 794
FR-A- 2 617 222**

(73) Patentinhaber : **HARDO- BEFESTIGUNGEN
GMBH
Dieselstrasse 4
W-5760 Arnsberg 2 (DE)**

(72) Erfinder : **Bertaggia, Josef
Poststrasse 82
W-4223 Voerde 2 (DE)**

(74) Vertreter : **Fritz, Edmund Lothar, Dipl.-Chem. et
al
Patentanwaltskanzlei Fritz Mühlenberg 74
W-5760 Arnsberg 1 (DE)**

## Beschreibung

Die vorliegende Erfindung betrifft eine Einrichtung für die Befestigung einer Dachdichtungsbahn an einer Dachunterkonstruktion mit den Merkmalen nach dem Oberbegriff des Hauptanspruchs.

Die Dachdichtungsbahnen können Folienbahnen sein, die verklebt werden, oder an Überlappungsnähten verschweißte Bahnen aus Dachpappe. Eine solche Abdeckung kann bei Flachdächern, geneigten oder gewölbten Dächern vorgesehen sein. Die tragfähigen Dachunterkonstruktionen können aus Trapezblechen, Spanplatten bestehen oder aus anderen Werkstoffen mit der erforderlichen Tragfähigkeit, geeignet zur Aufnahme von Befestigungsschrauben.

Eine Einrichtung für die Befestigung einer Dachdichtungsbahn an einer Dachunterkonstruktion mit den im Oberbegriff des Hauptanspruchs genannten Merkmalen ist zum Beispiel in der EP-A-0 283 184 beschrieben. Nachteilig ist bei dieser bekannten Befestigunseinrichtung unter anderem, daß bei vertikaler Druckbelastung zum Beispiel beim Begehen des Dachs über die Halteschraube Kräfte in das Blech der Dachunterkonstruktion eingeleitet werden. Außerdem werden bei Befestigungseinrichtungen dieser Art die Befestigungselemente in der Regel im Überlappungsbereich zweier Folienbahnen angebracht. Ein Flachdach läßt sich schematisch in drei Bereiche einteilen, einen mittigen Bereich, einen Randbereich und einen Eckbereich. Da die Windbelastung und die dadurch verursachten Abrißkräfte naturgemäß im Rand- und im Eckbereich des Flachdachs am größten sind, mußten nach dem Stand der Technik im Rand- und im Eckbereich wesentlich mehr Befestigungselemente in geringeren Abständen gesetzt werden. Da die Befestigung nur im Überlappungsbereich zweier Folienbahnen erfolgen konnte wurden die Folien in entsprechende schmalere Bahnen geschnitten, im genügend Überlappungszonen zu erhalten. Es werden also im Rand- und im Eckbereich bei dieser Art der Befestigung mehr Befestigungselemente benötigt und der Verbrauch der Dachfolienbahnen ist höher als es der Fläche des Flachdachs entspricht.

Die Aufgabe der vorliegenden Erfindung besteht darin, eine verbesserte Befestigungseinrichtung für Dachfolienbahnen der vorgenannten Art zu schaffen, die an beliebiger Stelle der Dachfläche gesetzt werden kann und eine sichere Befestigung gewährleistet bei gleichzeitiger Verringerung der für die Abdeckung erforderlichen Dachfolienfläche. Die Lösung dieser Aufgabe liefert eine Befestigungseinrichtung für eine Dachfolienbahn mit den kennzeichnenden Merkmalen des Hauptanspruchs. Erfindungsgemäß ist neben dem Befestigungselement und der Halteschraube eine den Kopf des Befestigungselements übergreifende Abdeckkappe vorgesehen, die in einem äußeren Teilbereich auf der Dachfolienbahn aufliegt und mit dieser fest verbindbar ist und die an der Unterseite mittig einen Schaft mit Außengewinde aufweist, mittels dessen die Abdeckkappe mit dem Befestigungselement verschraubbar ist. Die Abdeckkappe hat eine ausreichende Auflagefläche für eine sichere Befestigung des Befestigungselements auf der Dachfolienbahn. Die Abdeckkappe verhindert weiter das Eindringen von Wasser durch die Befestigungsöffnung in der Dachfolie. Das erfindungsgemäße Abdeckelement ermöglicht eine Anbringung der Befestigungselemente und Schrauben an beliebiger Stelle der Dachfolienbahnen und nicht nur im Überlappungsbereich zweier nebeneinander liegender Bahnen. Aufgrund dieser Art der Befestigung kann der Überlappungsbereich selbst so schmal wie möglich gehalten werden. Da keine Befestigungselemente im Überlappungsbereich erforderlich sind und somit keine Unebenheiten im Überlappungsbereich vorhanden sind, kann das Verschweißen zweier benachbarter Dachfolienbahnen effektiver erfolgen. Vorzugsweise weist die Abdeckkappe, die etwa schirmförmig ausgebildet ist, eine mittige Ausnehmung auf, die den Kopf des Befestigungselements übergreift sowie einen konzentrischen äußeren Ringflansch, der auf der Dachfolienbahn aufliegt. Die Verbindung des Ringflansches mit der Dachfolienbahn kann zum Beispiel durch Anlösen der Auflagefläche mittels eines Lösungsmittels und anschließendes Andrücken erfolgen, wobei die Abdeckkappe quasi mit der Dachfolie verklebt.

Die Erfindung schließt folgende alternative Ausführungsformen ein: Für die Verbindung zwischen Befestigungselement und Abdeckteller können anstatt Gewindeverbindungen auch andere Verbindungsarten wie Bajonettverschlüsse, Rastverbindungen oder Schnappverschlüsse vorgesehen sein. Die Gewinde können aus Kunststoff oder Metall bestehen. Die Komprimierzone ist nicht unbedingt an eine zylindrische Form gebunden. Die Verbindung zwischen Abdeckteller und Dichtungsbahn muß wasserdicht sein und kann durch Verklebung, Verschweißung oder auf chemischem Wege hergestellt werden.

Durch die abdichtende, im Halteteller verankerte Abdeckkappe wird bei Druckbelastung im Hinblick auf die Komprimierzone keine Kraft in die Verbindung zwischen Schraube und Untergrund eingeleitet. Im Hinblick darauf können auch dünne Stahlbleche keine Verformung erleiden. Durch die Komprimierzone wird auch eine direkte Wärmeleitung unterbrochen.

Befestigungselemente nach der Erfindung können an beliebigen Stellen der Dachhaut angesetzt werden. Es besteht kein Zwang, sie im Bereich der Überlappungsnähte anzusetzen. Erforderlich ist nur eine entsprechende Anzahl pro m² Dachfläche. Bei der Montage ist es daher möglich, Standardbahnen in herkömmlicher Weise zu verlegen und wasserdicht zu verbinden. Erst danach brauchen an beliebigen Stellen Befestigungseinrichtungen nach der Erfindung angebracht zu werden. Bei Windangriff durch Sog können sich die Dichtungsbahnen im Bereich der Überlappungsnähte frei anheben. Die Gefahr, daß dadurch die Überlappungsverbindungen reißen, wie es vielfach der Fall ist, wenn die Verbindung im Bereich der Nähte hergestellt sind, wird dadurch vermieden.

Im folgenden wird die vorliegende Erfindung anhand eines Ausführungsbeispiels unter Bezugnahme auf die Zeichnungen näher beschrieben. Dabei zeigen

Fig. 1 einen Schnitt durch ein Flachdach mit einer erfindungsgemäßen Befestigungsvorrichtung;

Fig. 2 eine Draufsicht auf einen erfindungsgemäßen Abdeckteller;

Fig. 3 einen Schnitt durch den Abdeckteller gemäß Fig. 2;

Fig. 4 eine Ansicht des Abdecktellers von unten;

Fig. 5 einen Längsschnitt durch ein erfindungsgemäßes Befestigungselement.

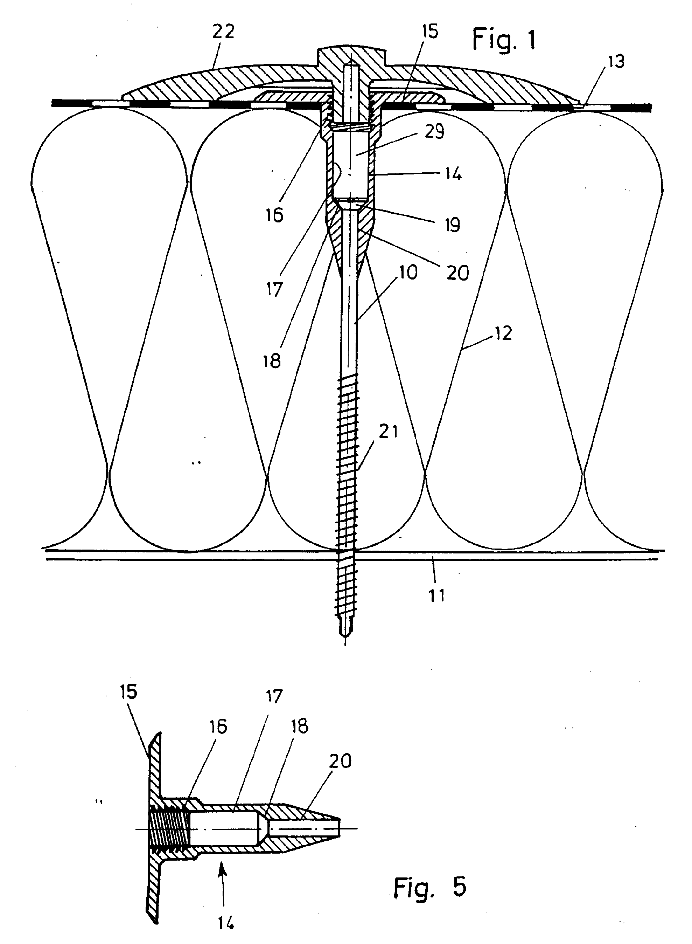

Zunächst wird auf Fig. 5 Bezug genommen und das erfindungsgemäße Befestigungselement 14 näher beschrieben. Das Befestigungselement zur Befestigung einer Dachdichtungsbahn, zum Beispiel einer Dachfolie eines Flachdachs besteht aus einem kreisförmigen Kopf 15, der unterseitig die Dachfolie andrückt und einem Schaft 17. Der Schaft ist hohl und in seinem oberen Abschnitt mit einem Innengewinde 16 versehen. An das Innengewinde 16 schließt sich nach unten hin ein gewindeloser Abschnitt gleichen Durchmessers an, an den sich wiederum ein konischer Abschnitt 18 anschließt. Auf den konischen Abschnitt 18 hin folgt nach unten ein zylindrischer Abschnitt 20 mit geringerem Querschnitt, dessen Durchmesser dem Schaftdurchmesser einer Befestigungsschraube 10 entspricht. Der konische Abschnitt 18 nimmt den Kopf 19 einer längeren Senkkopfschraube 10 auf, die in ihrem unteren Bereich ein Gewinde 21 aufweist, das das Trapezblech 11 durchdringt (siehe die Darstellung gemäß Fig. 1).

Gemäß der Darstellung von Fig. 1 weist das Flachdach ein Trapezblech 11 auf, eine darüber liegende Isolierschicht 12 und eine darauf liegende Dachfolie 13, die in der Regel aus überlappenden Bahnen aus einem hochpolymeren Kunststoff wie zum Beispiel PVC besteht. Wie aus der Zeichnung gemäß Fig. 1 ersichtlich ist, liegt der Kopf 15 des Befestigungselementes 14 auf der Dachfolie 13 und der Schaft 17 des Befestigungselements 14 durchdringt die Isolierschicht. Von oben her wird nach dem Auflegen des Elementes 14 die Befestigungsschraube 10 durch den hohlen Schaft des Befestigungselements 14 eingeführt und mit dem Gewindeabschnitt 21 in dem Trapezblech 11 festgeschraubt. Da für den Senkkopf 19 der Schraube der konische Abschnitt 18 des hohlen Schafts des Befestigungselementes 14 als Widerlager dient, wird der Kopf 15 die Dachfolie 13 fest andrücken. Um die Befestigungseinrichtung der Dachfolie wasserdicht zu verschließen, wird nun der Abdeckteller 22 mit seinem Gewinde 26 in das Innengewinde 16 des Befestigungselements 14 eingeschraubt.

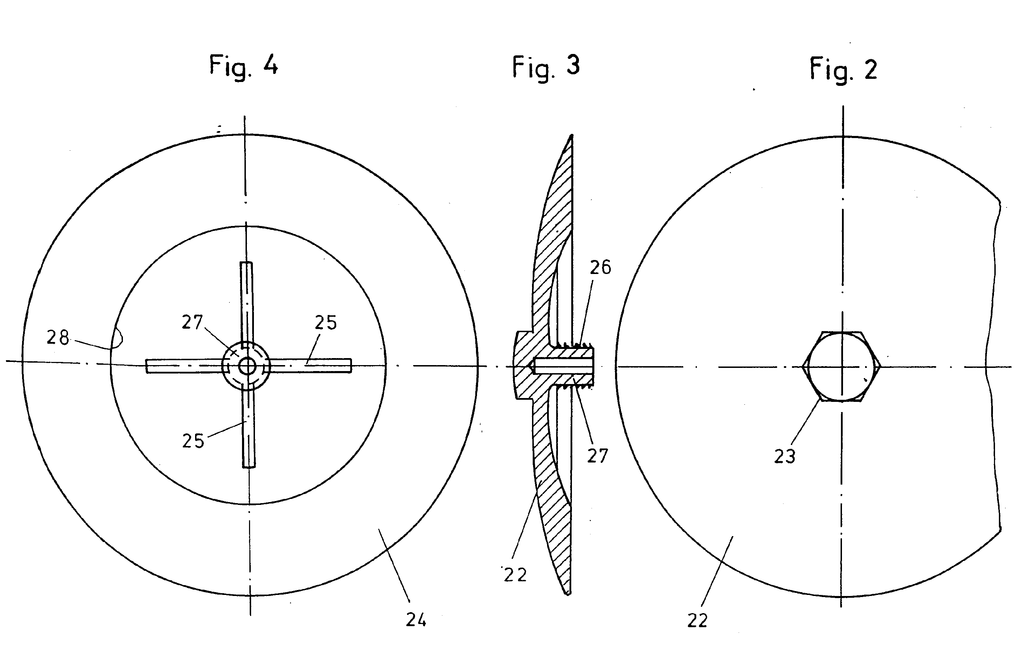

Der erfindungsgemäße Abdeckteller ist in den Figuren 2 bis 4 näher dargestellt. Der Abdeckteller 22 weist an der Oberseite in der Mitte einen Sechskant 23 auf. In Verlängerung desselben erstreckt sich an der Unterseite ein Schaft 27, der mit einem Außengewinde 26 versehen ist. Der Abdeckteller ist etwa schirmartig ausgebildet und weist an der Unterseite eine etwa pilzkopfförmige Ausnehmung 28 auf, an die sich konzentrisch ein flacher äußerer ringförmiger Anlagebereich 24 anschließt, der nach Aufschrauben des Abdecktellers 22 auf das Befestigungselement 14 mit der Dachfolie 13 verklebt wird. Eine dichte Verbindung zwischen Abdeckteller 22 und Folie 13 kann durch Anlösen der Anlagefläche 24 mit einem Lösungsmittel und anschließendes Andrücken an die Dachfolie erzielt worde. Alternativ kann auch eine Erwärmung zur Verschmelzung der Anlagefläche 24 mit der Folie 13 vorgesehen sein.

Wie aus Fig. 4 ersichtlich ist, weist der Abdeckteller 22 im Bereich der mittigen Ausnehmung 28 radial verlaufende Verstärkungsrippen 25 auf. Diese Verstärkungsrippen 25 gehen von dem Schaft 27 aus. Die erfindungsgemäße Befestigung der Dachfolie hat auch den Vorteil, daß bei Belastung des Befestigungselements 14 in waagerechter Richtung, die durch Schrumpfung der Folienbahn 13 erzeugt wird, die Kräfte in Kopf und Schaft des Befestigungselements 14 eingeleitet werden, wobei die Befestigungsschraube 10 jedoch nicht belastet wird, da zwischen der Schraube 10 und dem Schaft 17 des Befestigungselements 14 eine Art gelenkige Verbindung besteht. Ein erheblicher Vorteil der vorliegenden Erfindung besteht darin, daß zwischen dem Kopf 19 der Schraube 10 und dem Innengewindeabschnitt 16 in dem hohlen Schaft des Befestigungselements 14 eine Komprimierzone 29 vorgesehen ist. Beim Begehen des Abdecktellers 22 werden dieser und das mit diesem fest verbundene Befestigungselement 14 nach unten gedrückt, wobei jedoch die Schraube 10 nicht belastet wird, da deren Kopf 19 in der Komprimierzone 29 des hohlen Schafts in axialer Richtung nach oben gleiten kann.

**Patentansprüche**

1. Einrichtung für die Befestigung einer Dachdichtungsbahn an einer Dachunterkonstruktion mit einem Befestigungselement (14), dessen Kopf (15) auf der Dichtungsbahn (13) aufliegt und dessen hohler Schaft (17) die Dichtungsbahn durchdringt und in eine darunterliegende Dämmschicht (12) eindringt, wobei dieser Schaft das obere Ende einer Halteschraube (10) aufnimmt, mittels derer das Befestigungselement (14) an einem Blech (11) der Dachunterkonstruktion verankert ist, gekennzeichnet durch die nachfolgend genannten Merkmale:

- es ist eine den Kopf (15) des Befestigungselements übergreifende Abdeckkappe (22) vorgesehen, die in einem äußeren Teilbereich, der durch eine ringförmige Anlagefläche (24) gebildet ist, auf der Dichtungsbahn (13) aufliegt, geeignet zur Herstellung einer wasserdichten Verbindung mit der Dichtungsbahn, wobei die Abdeckkappe (22) an der Unterseite mittig einen Schaft (27) mit Außengewinde (26) aufweist, mittels dessen sie mit dem Befestigungselement (14) verschraubbar ist;

- der hohle Schaft des Befestigungselements (14) ist in einem oberen Bereich mit einem Innengewinde (16) versehen, an das sich nach unten hin ein gewindeloser zylindrischer Abschnitt gleichen Innendurchmessers anschließt, der als Komprimierzone (17) dient und dessen Innendurchmesser dem Durchmesser des Schraubenkopfes entspricht;

- an den gewindelosen Abschnitt folgt nach unten hin ein konischer Abschnitt (18), an den sich nach unten hin ein zylindrischer Abschnitt (20) mit geringerem Querschnitt als die Komprimierzone (17) anschließt, dessen Durchmesser dem Schaftdurchmesser der Halteschraube (10) entspricht.

2. Einrichtung nach Anspruch 1, dadurch gekennzeichnet, daß im montierten Zustand der Kopf (19) der Halteschraube (10) von einem konischen Abschnitt (18) in der Höhlung des Schaftes des Befestigungsmittels (14) formschlüssig aufgenommen ist.

3. Einrichtung nach Anspruch 1 und 2, dadurch gekennzeichnet, daß die Abdeckkappe (22) etwa schirmförmig ausgebildet ist, eine mittige, den Kopf des Befestigungselementes übergreifende Ausnehmung (28) aufweist sowie einen äußeren konzentrischen auf der Dichtungsbahn aufliegenden Ringflansch (24).

**Claims**

1. Device for fastening a sealing web for a roof to a roof's understructure, comprising a fastening element (14), the head (15) of which rests on the sealing web (13) and the hollow shaft (17) of which passes through the sealing web and penetrates an insulating layer (12) positioned below the web, said shaft receiving the upper end of a holding screw (10) by means of which the fastening element (14) is anchored at a metal sheet (11) of the understructure of the roof, characterised by the following features:

- there is provided a cover cap (22) engaging over the head (15) of the fastening element and resting on the sealing web (13) with an outer partial region formed by an annular contact surface (24) for the purpose of providing a water-tight connection to the sealing web, the cover cap (22) comprising in the centre of its underside a shaft (27) with external threads (26) by means of which it can be screwed to the fastening element (14):

- the hollow shaft of the fastening element (14) is provided, in an upper region, with internal threads (16) followed downwardly by a cylindrical portion without threads having the same internal diameter which serves as compressing zone (17) and the internal diameter of which corresponds to the diameter of the head of the screw;

- the portion without threads is followed downwardly by a conical portion (18) which in its turn is followed downwardly by a cylindrical portion (20) having a smaller diameter than the compression zone (17) the diameter of which corresponds to the diameter of the shaft of the holding screw (10).

2. Device as claimed in claim 1, characterised in that, in the assembled condition, the head (19) of the holding screw (10) is positively received by a conical portion (18) in the hollow of the shaft of the fastening element (14).

3. Device as claimed in claims 1 and 2, characterised in that the cover cap (22) is shaped approximately like an umbrella, is provided with a central recess (28) extending over the head of the fastening element and comprises an outer concentrical annular flange (24) resting on the sealing web.

**Revendications**

1. Dispositif pour la fixation d'un lé d'étanchéité pour un toit sur la construction inférieure d'un toit, équipé d'un élément de fixation (14) dont la tête (15) repose sur le lé d'étanchéité (13) et dont la tige creuse (17) traverse le lé d'étanchéité et pénètre dans une couche d'isolation (12) inférieure, la tige renfermant l'extrémité supérieure d'une vis de serrage (10) à l'aide de laquelle l'élément de fixation (14) est ancré dans une tôle (11) de la construction inférieure du toit, caractérisé par les caractéristiques suivantes:

- la tête (15) de l'élément de fixation est couverte par un capuchon (22) dont la partie extérieure forme une surface de contact circulaire (24) et repose sur le lé d'étanchéité (13) ce qui permet un assemblage étanche à l'eau avec le lé d'étanchéité; le capuchon (22) présente au milieu de sa face inférieure une tige (27) avec un filet extérieur (26), permettant un raccord à vis avec l'élément de fixation (14);
- la tige creuse de l'élément de fixation (14) présente dans sa partie supérieure un filet de vis intérieur (16), suivi d'une partie cylindrique non filetée d'un diamètre intérieur égal qui sert de zone de compression (17) et dont le diamètre intérieur correspond au diamètre de la tête de vis;
- dans le prolongement de la partie non filetée, la tige présente une partie conique (18) et ensuite une partie cylindrique (20) avec un diamètre inférieur au diamètre de la zone de compression (17) qui correspond au diamètre de la vis de serrage (10).

2. Dispositif selon la revendication 1, caractérisé en ce que la tête (19) de la vis de serrage (10), en état monté, se trouve à engagement positif dans une partie conique (18) dans le creux de la tige de l'élément de fixation (14).

3. Dispositif selon les revendications 1 et 2, caractérisé en ce que le capuchin (22) présente à peu près la forme d'une parapluie, avec, au milieu, un creux (28) qui dépasse la tête de l'élément de fixation, et avec une collerette concentrique extérieure (24), posée sur le lé d'étanchéité.

Fig. 1

Fig. 5

Fig. 4

Fig. 3

Fig. 2

28

27

25

25

26

27

22

24

22

23

EP 0 412 382 B1